# EUROPEAN PATENT APPLICATION

(11) **EP 0 547 831 A1**
(43) Date of publication of application: **23.06.1993**
(21) Application number: 92311216.3
(22) Date of filing: 09.12.1992
(51) Int. Cl.: H01S 3/097

(54) **Pulse forming network bank for pulse pair generation in gas lasers**

(30) Priority: 18.12.1991 US 809601
(71) Applicant: TEXAS INSTRUMENTS INCORPORATED, Dallas Texas 75265 (US)
(72) Inventor: Berdanier, Barry N., Richardson, Texas 75082 (US)
(74) Representative: Nettleton, John Victor

(57) **Abstract**

A gas laser with the ability to perform at a high repetition rate without a large increase in average output power requirement, resulting in smaller lasers, smaller power supplies, smaller pulse forming networks and lower power consumption than is required in prior art devices. There is provided a unique pulse-forming network (PFN) bank wherein two energy storage capacitors (125, 135) are charged simultaneously and discharged sequentially into the same gas laser (140) to generates a pair of high peak power laser pulses. The time interval between the two pulses is limited only by the recovery time of a high voltage switch. A gas laser provided with the network in accordance with the present invention transmits information by pulse position modulation (PPM) . The information content is limited only by the jitter of the high voltage switch (80, 90). A laser transmitting information by PPM can easily contain in two pulses what a laser transmitting pulse code modulation (PCM) can contain in twelve pulses. Without the present invention, a gas laser requires a much larger power supply to transmit information by PPM because it must recharge the PFN between lasings. Since a gas laser utilizing the PFN in accordance with the present invention does not recharge between lasings, it can also provide shorter inter-pulse timing.

## Description

### BACKGROUND OF THE INVENTION

### FIELD OF THE INVENTION

This invention relates to laser pulse generation and, more specifically, to a network for generating a pair of closely time spaced pulses from a laser.

### BRIEF DESCRIPTION OF THE PRIOR ART

Many gas laser applications require that the laser transmit multiple pulses at a high repetition rate. The high repetition rate provides information content for many commercial and military applications, such as communications, weapons simulation and identification friend or foe (IFF). The high repetition rate also provides a short inter-pulse period for measurement systems such as differential absorption LIDAR (DIAL) which require short correlation times.

When the repetition rate of the gas laser increases to support these applications, the power output thereof as well as power consumption and power dissipation also increases. The laser and its power supply increase in size to accommodate the increase in average power requirement. When the size of the laser increases, the system it supports also increases in size and when the laser consumes and dissipates more power, the system must supply the increased power and remove the increased heat dissipated by the laser. Obviously, a solution is required which does not require a large increase in average power requirement or consumption.

### SUMMARY OF THE INVENTION

In accordance with the present invention, there is provided a gas laser with the ability to perform at a high repetition rate relative to prior art systems (about 720 KHertz and theoretically higher as opposed to drastically lower repetition rates in the prior art) without a large increase in average output power requirement. The lower output power requirement results in smaller lasers, smaller power supplies, smaller pulse forming networks and lower power consumption than is required in prior art devices performing the above described function.

Briefly, in accordance with the present invention, there is provided a unique pulse-forming network (PFN) bank which allows at least two energy storage capacitors to be charged simultaneously and discharged sequentially into the same gas laser to generates at least two high peak power laser pulses. The time interval between these two pulses or pulse pair is limited only by the recovery time of a triggered high voltage switch which discharges the capacitor through the laser and hence initiates the lasing of the laser.

A gas laser provided with the network in accordance with the present invention transmits information by pulse position modulation (PPM). The information content is limited only by the jitter of the high voltage switch. A laser transmitting information by PPM can easily contain in two pulses what a laser transmitting pulse code modulation (PCM) can contain in twelve pulses. Without the present invention, a gas laser requires a much larger power supply to transmit information by PPM because it must recharge the PFN between lasings. Since a gas laser utilizing the PFN in accordance with the present invention does not recharge between lasings, it can also provide shorter inter-pulse timing which is advantageous in many applications.

### BRIEF DESCRIPTION OF THE DRAWINGS

FIGURE 1 is a schematic diagram of a first embodiment of a pulse forming network in accordance with the present invention; and
FIGURE 2 is a schematic diagram of a second embodiment of a pulse forming network in accordance with the present invention.

### DESCRIPTION OF THE PREFERRED EMBODIMENTS

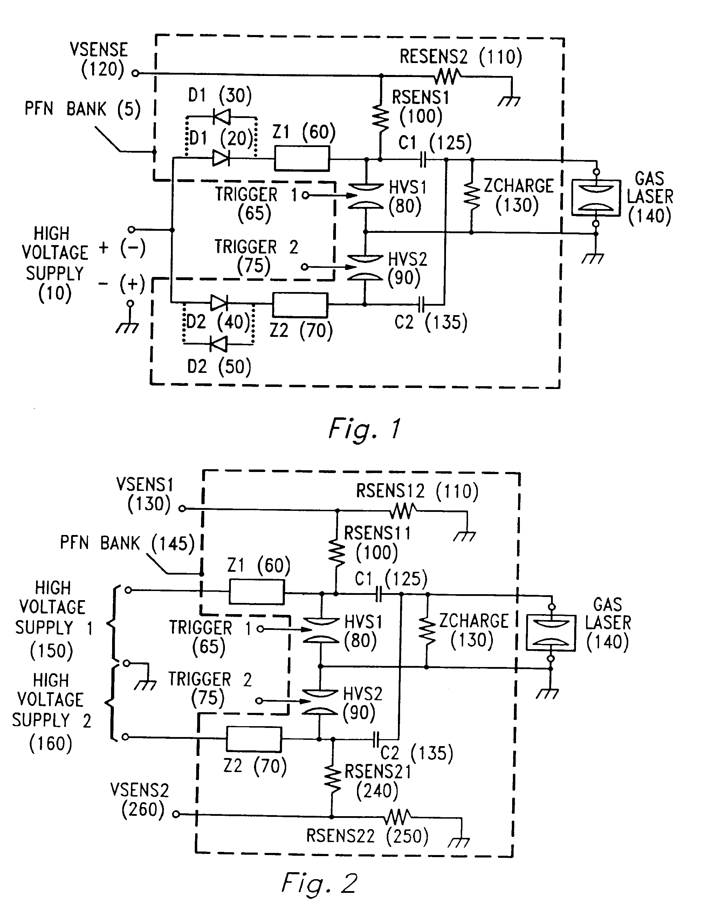

Referring first to FIGURE 1, there is shown a pulse forming network (PFN) bank 5 which is coupled to a gas laser 140 and a high voltage power supply 10. Capacitors 125 and 135 store the energy to be discharged into the laser 140. Impedance element 130 provides a charging path for capacitors 125 and 135. High voltage switches 80 and 90 cause discharge of the energy from capacitors 125 and 135 into the laser 140. Blocking impedances 60 and 70 prevent the output impedance of the high voltage power supply 10 from loading down the discharge from capacitors 125 and 135. Diodes 20 and 40 reduce voltage droop on the energy storage capacitors 125 and 135 between pulses. Resistors 100 and 110 divide down the high voltage on capacitor 125 to obtain an output voltage at terminal 120 which can be used for regulation of the high voltage power supply 10 in known manner (not shown). More specifically, the voltage supplied by the power supply 10 will determine the charging level of the capacitors 125 and 135. Since this charging level is represented at the terminal 120, the charging level can be adjusted by adjusting the level of the voltage delivered by power supply 10 under control of the signal at terminal 120 in well known manner.

The relative magnitude of the impedance 130 is small at the charge frequency and is sized merely to allow rapid charging of capacitors 125 and 135, yet relatively large at the characteristic frequency of the discharge to prevent robbing energy from the laser pulse. Impedance 130 is typically, but not necessarily, a resistor, inductor or a combination of the two. High voltage switches 80 and 90 hold off the charge voltage at capacitor 125 and 145 and withstand voltage reversal without triggering or loading down the discharge circuit. High voltage switches 80 and 90 are typically, but not necessarily, spark gaps.

The blocking impedances 60 and 70 isolate the impedance of the high voltage power supply from the discharge circuit. The blocking impedances 60 and 70 are typically, but not necessarily, a resistor, an inductor or a combination of the two. Diodes 20 and 40 withstand voltage reversals equal to the charge voltage and are either single diodes or diode stacks.

In operation, the high voltage power supply 10 charges energy storage capacitor 125 through diode 20 and blocking impedance 60 and simultaneously charges energy storage capacitor 135 through diode 40 and blocking impedance 70. The voltage at terminal 120 is a representation ratio of the voltage across capacitors 125 and 135 and can be fed back to the high voltage power supply 10 to improve voltage regulation in known manner (not shown).

A pulse at trigger 65 triggers high voltage switch 80, thereby discharging energy storage capacitor 125 into the gas laser 140 and generating the first laser pulse. During this discharge, blocking impedance 70 isolates the output impedance of high voltage power supply 10, preventing loading of the discharge. The high voltage power supply 10 can be shut down between laser pulses to speed recovery of switch 80 since diode 40 prevents voltage droop on energy storage capacitor 135.

After a predetermined time delay, a pulse at trigger 75 triggers high voltage switch 90, discharging energy storage capacitor 135 into the gas laser 140 and generating the second laser pulse. The recovery time of switch 80 determines the minimum possible delay between laser pulses while the allowable voltage droop at capacitor 135 determines the maximum possible delay. The high voltage power supply 10 recharges capacitor 125 and 135 after both capacitors have been discharged into the laser 140 and the operation cycle is then repeated. Since the PFN bank 5 is symmetric, either energy storage capacitor 125 or 135 can be discharged first.

As a variation on the above described first embodiment, noting that a positive polarity high voltage power supply 10 charges the PFN bank 5 therein, diodes 20 and 40 can be reversed by replacing them with diodes 30 and 50 which are shown in phantom in FIGURE 1, resulting in the PFN bank charging from a negative polarity high voltage power supply 10 as shown in brackets in FIGURE 1 rather than from the positive polarity high voltage power supply as described above. With the exception of the polarity reversal, this variation operates identically to the above described circuit of FIGURE 1.

Referring now to FIGURE 2, there is shown a circuit diagram of a pulse forming network (PFN) 145 in accordance with a second embodiment of the invention wherein two high voltage power supplies are required with the same polarity, either positive or negative. The use of two power supplies simultaneously eliminate the voltage droop problem on capacitors 125 and 135 between pulses with the result that diodes 20 and 40 of FIGURE 1 are not required. In this configuration, each power supply only shuts down once per cycle of two laser pulses in order to speed up high voltage recovery. This increases the duty cycle of the high voltage power supplies, resulting in the ability to run at higher repetition rates. Except for the diodes 20, 40 or 30, 50 of the variation in the FIGURE 1 embodiment and the second sense circuit involving impedances 240 and 250 and output terminal 260 which are identical in operation to the circuit including impedances 100 and 110 and terminal 130 which feed a signal back to power supply 160 rather than power supply 150, the embodiment of FIGURE 2 is identical to that of FIGURE 1. Accordingly, like reference numbers therein refer to the same structural elements.

In operation of the embodiment of FIGURE 2, high voltage power supply 150 charges energy storage capacitor 125 through blocking impedance 60 and, simultaneously, high voltage power supply 160 charges energy storage capacitor 135 through blocking impedance 70. The voltages at terminals 130 and 260 are representative ratios of the voltages on capacitors 125 and 135 respectively and can be fed back to the high voltage power supplies 150 and 160 respectively to improve voltage regulation in known manner (not shown).

A pulse at trigger 65 triggers high voltage switch 80, discharging energy storage capacitor 125 into the gas laser 140 and generating the first laser pulse. During this discharge, blocking impedance 70 isolates the output impedance of high voltage power supply 160, preventing loading of the discharge. Between laser pulses, high voltage power supply 150 can be shut down to speed recovery of switch 80.

After a predetermined time delay, a pulse at trigger 75 triggers high voltage switch 90, discharging energy storage capacitor 135 into the gas laser 140 and generating the second laser pulse. The recovery time of switch 80 determines the minimum possible time delay between laser pulses as in the first embodiment discussed above. High voltage power supply 150 recharges capacitor 125 after switch 80 recovers and high voltage power supply 160 recharges capacitor 135 after switch 90 recovers. Since the PFN bank 145 is symmetric, either energy storage capacitor 125 or 135 can be discharged first.

Though the invention has been described with respect to specific preferred embodiments thereof, many variations and modification will immediately become obvious to those skilled in the art. It is therefore the intention that the appended claims be interpreted as broadly as possible in view of the prior art to include all such variations and modification.

## Claims

1. A system for generating a pulse pair in a laser comprising:
(a) a pair of terminals for connection across a laser;
(b) a first triggerable switch and a first capacitor serially coupled across said terminals;
(c) a second triggerable switch and a second capacitor serially coupled across said terminals;
(d) a high voltage source coupled to each of said first and second capacitor for charging said first and second capacitors;
(e) circuitry blocking discharges from said first capacitor to said high voltage source; and
(f) circuitry blocking discharges from said second capacitor to said high voltage source.

2. The system of claim 1 wherein said circuitry for blocking discharges comprises:
(a) a first blocking impedance coupled between said high voltage source and said first capacitor for blocking discharges from said second capacitor to said high voltage source; and
(b) a second blocking impedance coupled between said high voltage source and said second capacitor for blocking discharges from said first capacitor to said high voltage source.

3. The system of claim 2 further including a first diode coupled between said high voltage source and said first capacitor and a second diode coupled between said high voltage source and said second capacitor.

4. The system of claims 1, 2 and 3 further including a laser coupled across said pair of terminals.

5. The system of claim 1, 2, 3, 4, 5 and 6 wherein said high voltage source comprises a first high voltage supply serially coupled across said first switch and said circuitry blocking discharges from said first capacitor to said high voltage source and a second high voltage supply serially coupled across said second switch and said circuitry blocking discharges from said second capacitor to said high voltage source.

6. A system for generating a pulse pair in a laser comprising:
(a) a pair of terminals for connection across a laser;
(b) a first current discharge device selectively coupled across said terminals;
(c) a second current discharge device selectively coupled across said terminals; and
(d) a charging circuit for charging said first and second current discharge devices to a predetermined charge level which is electrically isolated from said first current discharge device when said second current discharge device is discharging and electrically isolated from said second current discharge device when said first current discharge device is discharging.

7. The system of claim 6 further including a laser coupled across said terminals.
